# EUROPEAN PATENT APPLICATION

(11) **EP 1 695 882 A1**
(43) Date of publication of application: **30.08.2006**
(21) Application number: 03780695.7
(22) Date of filing: 10.12.2003
(51) Int. Cl.: B60T 7/06, B60K 26/04, B62D 6/00

(54) **OPERATION INPUT DEVICE**

(71) Applicant: Hitachi, Ltd., Tokyo 100-8280 (JP)
(72) Inventor: UENO, K.; c/o Automotive Systems;Hitachi, Ltd., Hitachinaka-shi, Ibaraki 312-8503 (JP); YOKOYAMA, A; c/o Mec. Eng. Res. Lab.;Hitachi Ltd., Tsuchiura-shi, Ibaraki 300-0013 (JP); KURAMOCHI, Y.; c/o Automotive Systems;Hitachi, Ltd, Hitachinaka-shi, Ibaraki 312-8503 (JP); MANAKA, T.; c/o Automotive Systems;Hitachi, Ltd, Hitachinaka-shi, Ibaraki 312-8503 (JP); SASAKI, M.; c/o Automotive Systems;Hitachi, Ltd., Hitachinaka-shi, Ibaraki 312-8503 (JP)
(74) Representative: Beetz & Partner
(86) International application number: PCT/JP2003/015791
(87) International publication number: WO 2005/056357

(57) **Abstract**

An operation input device of a vehicle capable of operating the vehicle by allowing an operation input into the vehicle even when an active reaction part (3) is not operated. In one embodiment of this invention, the device comprises an operation input part (1) receiving an operational force, the active reaction part (3) generating, against an applied operating force, a reaction by an electrical control in the operation input part (1), and an active reaction releasing part (4) opening a force transmission route between the active reaction part (3) and the operation input part (1).

## Description

### TECHNICAL FIELD

The present invention relates to an operation input device for operating a vehicle.

### BACKGROUND ART

There has been developed a technique for connecting, by electrical means, operation input devices (a brake pedal and an accelerator pedal, for example) for operating a vehicle to a vehicle system having mechanisms or devices (a brake and a throttle bulb, for example) determining the behavior of the vehicle, and electrically controlling independently the operation of the operation input devices and that of the vehicle.

The operation of a vehicle is conducted by applying an operating force to an operation input device. In the above described technique, between the operation input device and the mechanisms or devices determining the behavior of the vehicle, there is no mechanism directly transmitting an operating force. Accordingly, the operation input device needs to include a mechanism returning a reaction against an operating force and thereby give a suitable operation feeling to the driver.

The mechanisms returning a force against an operating force include a passive reaction unit (an unit using a spring element or a dumper element, for example) implementing a preliminarily set characteristic by use of a mechanical configuration and an active reaction unit implementing a characteristic by using an electrically-driven actuator or the like to perform electrical control. When the passive reaction unit and active reaction unit are simultaneously used, it becomes possible to control and make variable the reaction of pedal within a practical range by use of a small-capacity actuator. JP-A-2002-323930 describes an example in which an operation input device combining passive reaction and active reaction in this manner is implemented for a brake pedal.

In the above described conventional art, there is a problem in that when the active reaction unit is inactive, a large load may be applied to the operation input device by a friction resistance or a counterelectromotive force of the actuator, making the operation input device hard to operate or not operatable at all, and thus disabling the operation input into the vehicle.

### DISCLOSURE OF THE INVENTION

An object of the present invention is to allow an operation input into a vehicle even when an active reaction unit is inactive, and thereby allow driving of the vehicle.

An operation input device for a vehicle includes an operation input part receiving an operating force; an active reaction part generating, against an applied operating force, a reaction by an electrical control in the operation input part; and an active reaction releasing part opening a force transmission route between the active reaction part and the operation input part.

### BRIEF DESCRIPTION OF THE DRAWINGS

Fig. 1 is a block diagram showing a configuration of an embodiment;
Fig. 2 is a schematic diagram showing a configuration of the embodiment;
Fig. 3 is a block diagram showing a function of a calculation device;
Fig. 4 is a schematic diagram showing an example of operation input part;
Fig. 5 is a schematic diagram showing an example of operation input part;
Fig. 6 is a schematic diagram showing an example of operation input part;
Fig. 7 is a schematic diagram showing an example of operation input part;
Fig. 8 is a schematic diagram showing an example of operation input part;
Fig. 9 is a schematic diagram showing an example of operation input part;
Fig. 10 is a graph representing reaction in an operation input device;
Fig. 11 is a graph representing reaction in the operation input device;
Fig. 12 is a schematic diagram showing an example of passive reaction part;
Fig. 13 is a schematic diagram showing an example of passive reaction part;
Fig. 14 is a schematic diagram showing an example of passive reaction part;
Fig. 15 is a schematic diagram showing an example of active reaction part;
Fig. 16 is a schematic diagram showing an example of active reaction part;
Fig. 17 is a schematic diagram showing an example of active reaction part;
Fig. 18 is a schematic diagram showing an example of active reaction part;
Fig. 19 is a graph for determining an elasticity coefficient;
Fig. 20 is a graph for determining a damping coefficient;
Fig. 21 is a graph for determining a reaction in the operation input device;
Fig. 22 is a graph for determining a reaction in the operation input device;
Fig. 23 is a schematic diagram showing an example of means for measuring an operating force;
Fig. 24 is a schematic diagram showing an example of means for measuring an operating force;
Fig. 25 is a schematic diagram showing an example of means for measuring an operating width;
Fig. 26 is a schematic diagram showing an example of active reaction releasing part;
Fig. 27 is a schematic diagram showing an example of active reaction releasing part;
Fig. 28 is a schematic diagram showing an example of active reaction releasing part;
Fig. 29 is a schematic diagram showing an example of active reaction releasing part;
Fig. 30 is a graph used in an active reaction part normal determination part;
Fig. 31 is a graph used in the active reaction part normal determination part;
Fig. 32 is a graph for determining an operating width;
Fig. 33 is a graph for determining an operating speed; and
Fig. 34 is a schematic diagram showing an example of means for obtaining operation information by a switch.

### BEST MODE FOR CARRYING OUT THE INVENTION

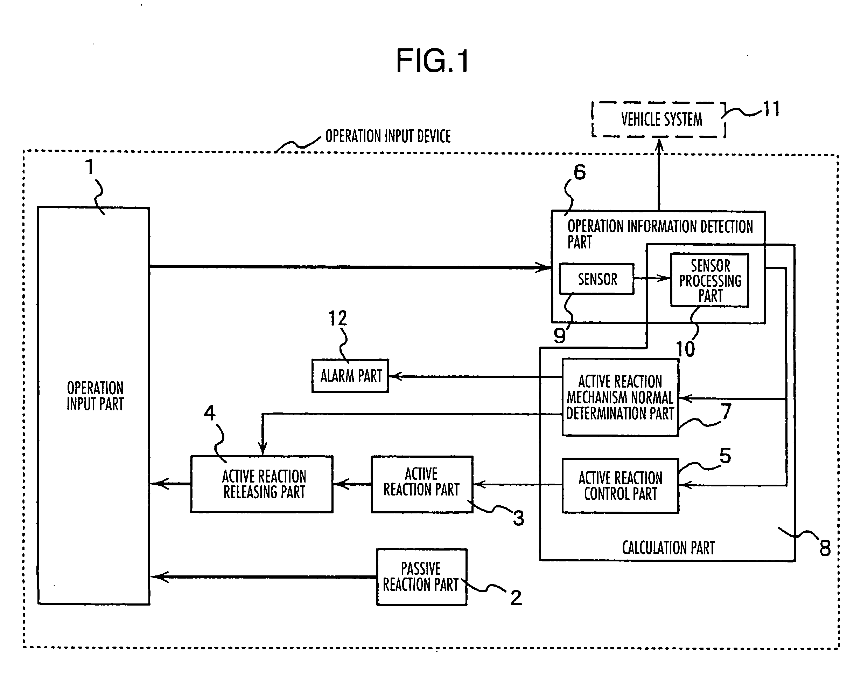

Embodiments of the present invention will be described below with reference to the drawings. Fig. 1 shows an example of operation input device for a vehicle to which the present invention is applied.

Referring to Fig. 1, reference numeral 1 denotes an operation input part receiving an driving operation, 2 denotes a passive reaction part implementing a preliminarily set characteristic by a mechanical configuration, 3 denotes an active reaction part capable of controlling a generated reaction, 5 denotes an active reaction control device controlling the active reaction part, and 4 denotes an active reaction releasing part cutting off reaction transmission between the active reaction part 3 and the operation input part 1.

Here, the passive reaction part 2 is connected to the operation input part 1 and generates a predetermined reaction against an operating force applied to the operation input part 1. Also, the active reaction part 3 is connected to the operation input part 1 via the active reaction releasing part 4 and can generate a reaction controlled by the active reaction control device 5 in the operation input part 1.

Operation information supplied to the operation input part 1 is detected by an operation information detection part 6 and transmitted to the active reaction control device 5, an active reaction part normal determination part 7 described later, or a vehicle system 11. The operation information detection part 6 includes a sensor 9 detecting a state of the operation input part 1 and a sensor processing part 10 performing a processing of the sensor signal. Also, the active reaction part normal determination part 7 triggers activation of the active reaction releasing part 4 or triggers activation of an alarm part 12 based on the operation information of the operation input part 1 detected by the operation information detection part 6. Here, the sensor processing part 10, the active reaction part normal determination part 7 and the active reaction control device 5 are implemented by a calculation device 8. The vehicle system 11 determines a behavior of the vehicle based on the operation information of the operation input part 1 detected by the operation information detection part 6.

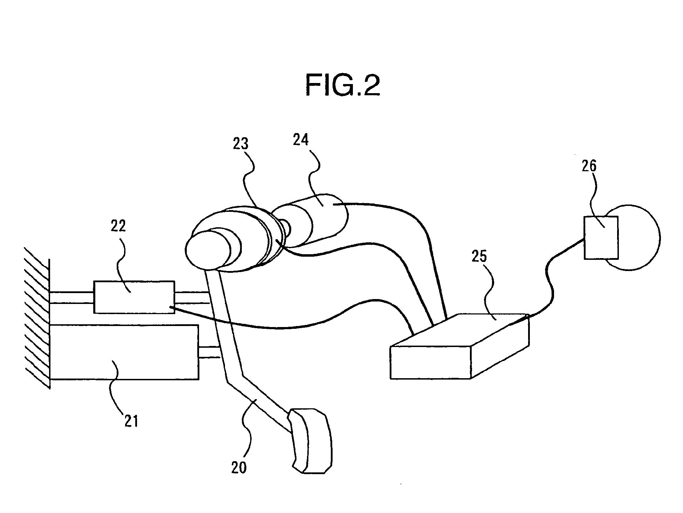

As a more specific example of the embodiment shown in Fig. 1, an example in which the operation input part 1 is a brake pedal is shown in Fig. 2.

Referring to Fig. 2, a pedal 20, a passive reaction part 21, an electrically-driven actuator 24, an active reaction releasing part 23, an calculation device 25, a sensor 22 and an electrically-driven caliper 26 correspond to the operation input part 1, the passive reaction part 2, the active reaction part 3, the active reaction releasing part 4, the calculation device 8, the sensor 9 and the vehicle system 11 shown in Fig. 1, respectively.

In the above described configuration, by pushing down the pedal 20 against a reaction generated by the passive reaction part 21, the operation input part is operated. A pushing width, a pushing speed or a pushing force of the pedal 20 is detected by the sensor 22. The electrically-driven actuator 24 is connected to the active reaction releasing part 23 and electrically controlled to supply a reaction to the pedal 20. Thus, the reaction applied to the pedal 20 is equal to the sum of the reactions generated by the passive reaction part 21 and electrically-driven actuator 24.

Here, when a configuration is employed such that the passive reaction part 21 generates a basic reaction and the electrically-driven actuator 24 performs an appropriate reaction correction, then a reaction sufficient for the brake pedal can be realized while suppressing the output of the electrically-driven actuator 24.

Also, the calculation device 25 detects an operation from a signal of the sensor 22 and controls the electrically-driven actuator 24, and at the same time transmits the operation information to the electrically-driven caliper 26. Here, the electrically-driven caliper 26 corresponds to the vehicle system 11 and can change the behavior of the vehicle by producing a braking force of the vehicle.

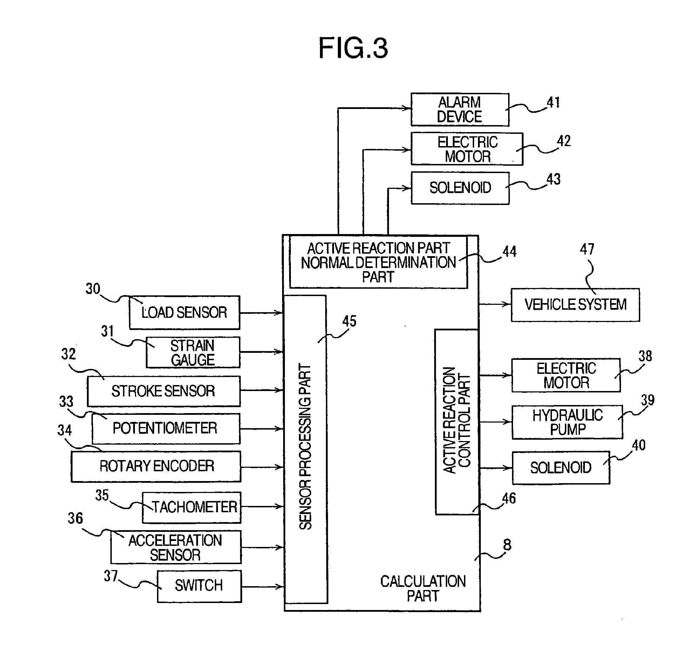

Details of the calculation device 8 of Fig. 1 will now be described with reference to Fig. 3.

Referring to Fig. 3, an active reaction control part 46, an active reaction part normal determination part 44 and a sensor processing part 45 correspond to reference numerals 5, 7 and 10 of Fig. 1, respectively.

To the sensor processing part 45, there is supplied information from the sensor 9 detecting operation information supplied to the operation input part 1. Based on the information, the active reaction control device 46 controls the active reaction part 3, whereby reaction characteristic is controlled.

Here, the sensor 9 can be selected, according to the physical quantity used to detect an operation, from among various sensors as shown in reference numerals 30 to 37 of Fig. 3. For example, by using a load sensor 30 or a strain gauge 31 as the sensor 9, an operating force applied to the operation input part may be detected; for example, by using a stroke sensor 32, a potentiometer 33 or a rotary encoder 34, an operating width of the operation input part may be detected. Alternatively, by using a tachometer 35 as the sensor, an operating speed may be detected, or by using an acceleration sensor as the sensor 9, an operating acceleration may be detected. Also, by using as the sensor 9 a switch 37 detecting that the operation input part 1 has been operated, an operation may be detected.

As the active reaction part 3 allowing an active reaction to be generated, an electric motor 38, a hydraulic pump 39, a solenoid 39, and the like may be employed. When the active reaction control part 46 controls these devices, the reaction generated in the operation input part 1 is controlled.

The active reaction part normal determination part 44 will be described later; based on the information of the sensor processing part 45, the part 44 triggers activation of the alarm device 41, or drives the electric motor 42 or solenoid 43 for operating the active reaction releasing part.

Returning to Fig. 1, the operation input part 1 will be described. The operation input part 1 is a device used to input an operation for driving the vehicle, such as a pedal, a lever or a steering. Also, the operation input part 1 is a device in which the operating width or operating speed varies within a fixed range according to an operating force provided by the foot or hand, and which performs a rotation or a linear movement constrained to a fixed range in response to an operating force provided by the foot or hand. The operating force applied to the operation input part 1, or the operating width and operating speed of the operation input part 1 is transmitted to the vehicle system 11 as operation information to determine the behavior of the vehicle.

For example, when applied to a vehicle brake, a configuration may be employed such that a brake pedal is used as the operation input part 1, and an electrically-driven caliper or a hydraulic pump constituting a vehicle brake system is operated according to the operation information to decelerate the vehicle. Also, when applied to a vehicle accelerator, a configuration may be employed such that an accelerator pedal is used as the operation input part 1 and an electrically-controlled throttle is opened/closed according to the operation information to accelerate the vehicle. Alternatively, when applied to a vehicle steering, a configuration may be employed such that a steering is used as the operation input part 1 and the electrically-driven steering device is operated according to the operation information to steer the vehicle.

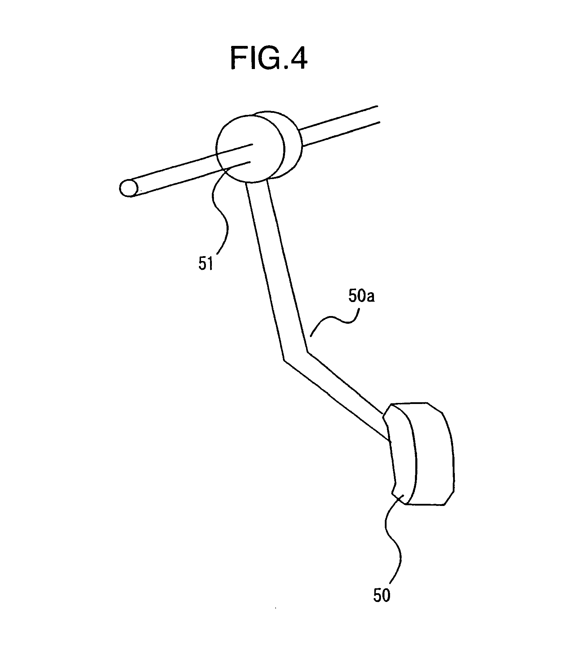

As a specific embodiment of the operation input part 1, ones shown in Figs. 4 to 9 are possible.

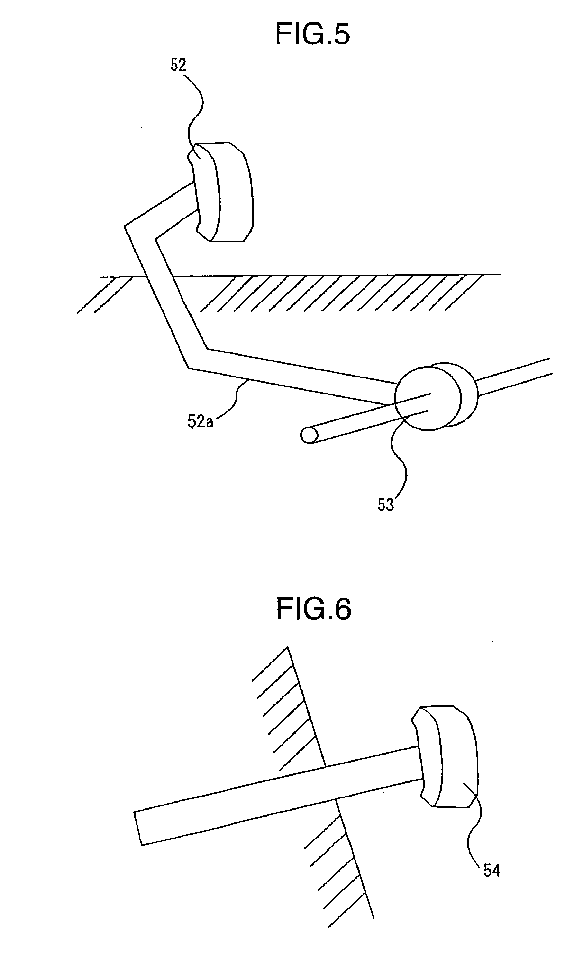

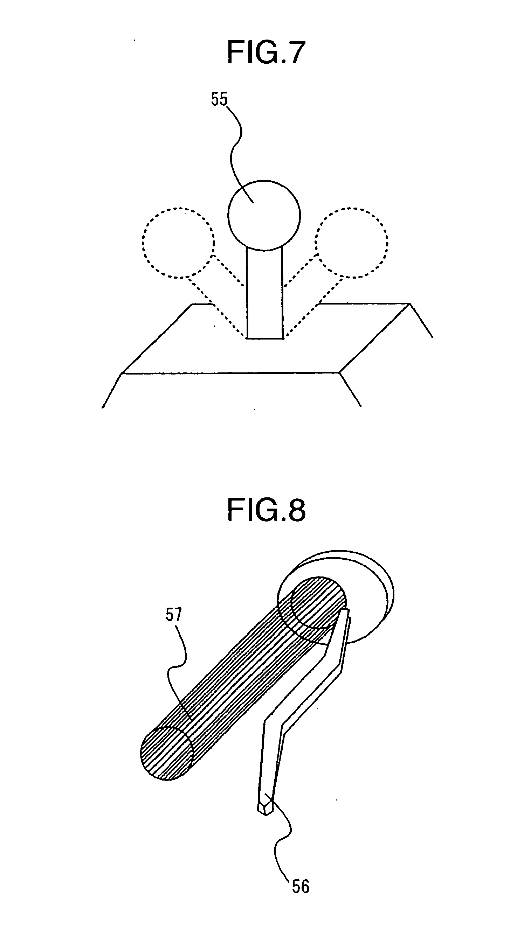

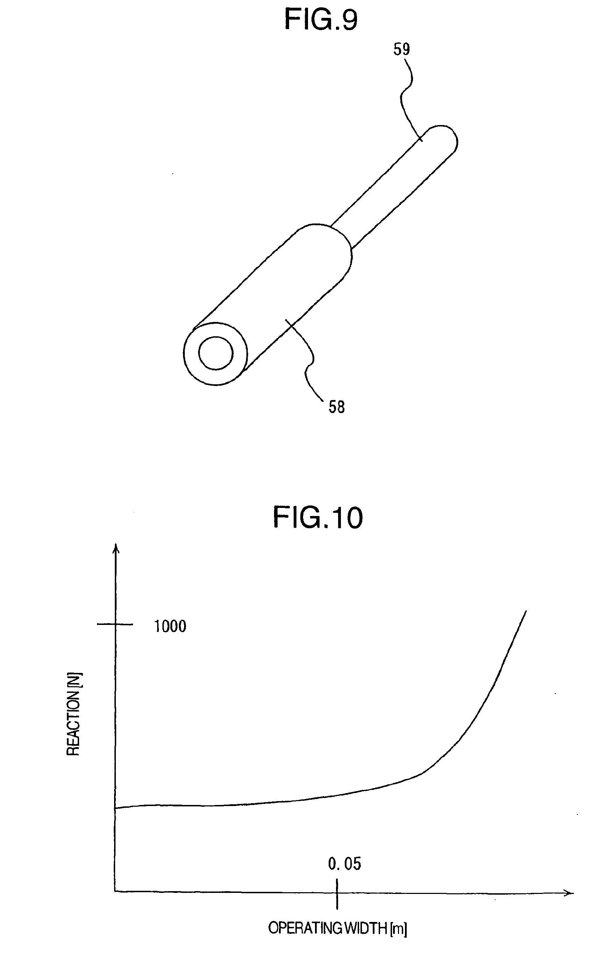

Fig. 4 shows an example which uses a pedal as the operation input part 1 and has a configuration in which when a force is applied to a tip end 50 of the pedal as an operating force, the pedal 50a rotates around a rotation axis 51. Fig. 5 shows another example which uses a pedal as the operation input part 1 and has a configuration in which a rotation axis 53 is arranged below a tip end 52 of the pedal 52a. A selection can be made from among the configurations of Figs. 4 and 5 according to design-related circumstances of the vehicle in which the operation input device is installed. Also, as shown in Fig. 6, a configuration may be employed such that the operation input part 1 is constrained to a linear-motion direction relative to a tip end 54 and perform a linear motion according to a force applied to the tip end 54. Further, a configuration may be employed such that the operation input part 1 is lever-shaped as shown in Fig. 7 and an operation point 55 is manipulated by the hand, or such that an operation part 56 is gripped, as shown in Fig. 8, together with a grip 57, or such that an operating part 58 is rotated, as shown in Fig. 9, around a axis 59. Also, though not shown, the operation input part 1 may be constituted as a steering. Details of a mechanism allowing a reaction to be generated in the operation input part as described above will be described later.

Returning again to Fig. 1, the passive reaction part 2 will be described. The passive reaction part 2 generates, by substance properties or mechanical structure, a reaction according to a state of the operation input part 1. The characteristic of the generated reaction is preliminarily determined according to the properties or mechanical structure of a substance constituting the passive reaction part and cannot be varied by an electrical signal or electrical control means.

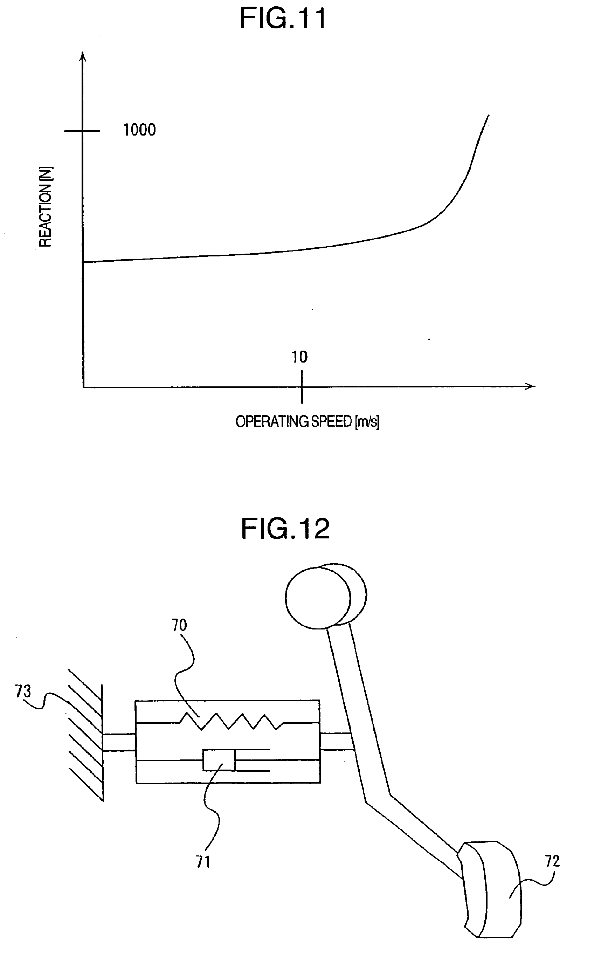

The reaction by substance properties or mechanical structure has elasticity characteristic generating a reaction according to an operating width and damping characteristic generating a reaction according to an operating speed. The passive reaction part includes at least one of the two. Also, it is possible to provide a reaction characteristic combining the two. As an illustrative example of reaction characteristic of the passive reaction part, for example, a characteristic varying according to an operating width as shown in Fig. 10, or a characteristic varying according to an operating speed as shown in Fig. 11 is possible.

A specific embodiment of the passive reaction part 2 is shown in Figs. 12 to 14. In Figs. 12 to 14, a description is given by taking as an example a case where a pedal is used as the operation input part 1 as shown in Fig. 4. However, a similar application is possible with respect to the operation input devices shown in Figs. 5 to 9.

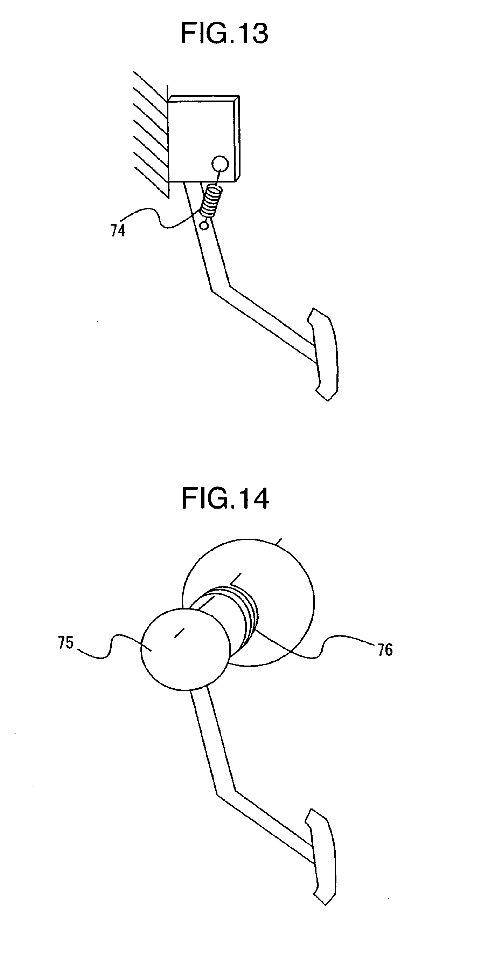

Fig. 12 shows an example in which a spring 70 having elasticity characteristics and a damper 71 having damping characteristics are installed in a sandwiched manner between a pedal 72 and a reference face 73. In the example, a configuration is employed such that the spring 70 shrinks according to a displacement by an operation input. In contrast, Fig. 13 shows an example in which a spring 74 is installed so as to extend according to a displacement by an operation input. Fig. 14 shows an example in which the passive reaction part is constituted by installing a return spring 76 in a rotation axis part 75 of the operation input device.

The active reaction part 3 will now be described. In the active reaction part, a reaction is generated by controlling an electrically-driven actuator by electrical control means. Here, as the electrically-driven actuator, for example, an electric motor or a solenoid may be used, or a configuration controlling an electrically-driven hydraulic pump may be used. Also, the active reaction part may include an amplifying mechanism for amplifying a force generated by the actuator, or a decelerating mechanism.

In the active reaction part 3, the reaction can be varied irrespective of the operating amount applied to the operation input part 1, and any reaction, though in a limited degree, can be generated with respect to the same displacement or the same operating speed. Accordingly, by installing the active reaction part in parallel with the passive reaction part 2, a force can be added to the reaction of the passive reaction part to thereby increase it, or a force having a direction reverse to that of the reaction of the passive reaction part can be generated to thereby reduce the reaction applied to the operation input part.

As described above, the characteristics of the reaction generated by the passive reaction part are determined by the substance constituting the passive reaction part and the mechanical structure thereof. However, in the active reaction part, an actuator is electrically driven to generate a reaction, and thus a reaction can be freely varied by the control. However, in order for the active reaction part to generate a large reaction, the size of the actuator must be increased and power consumption also becomes large. Therefore, if a configuration is employed such that the required reaction characteristic is mostly implemented by the passive reaction part and the reaction characteristic of pedal is varied by the active reaction part, a reaction the characteristic of which is varied within a practical range while reducing the output of the actuator, can be generated in the operation input part.

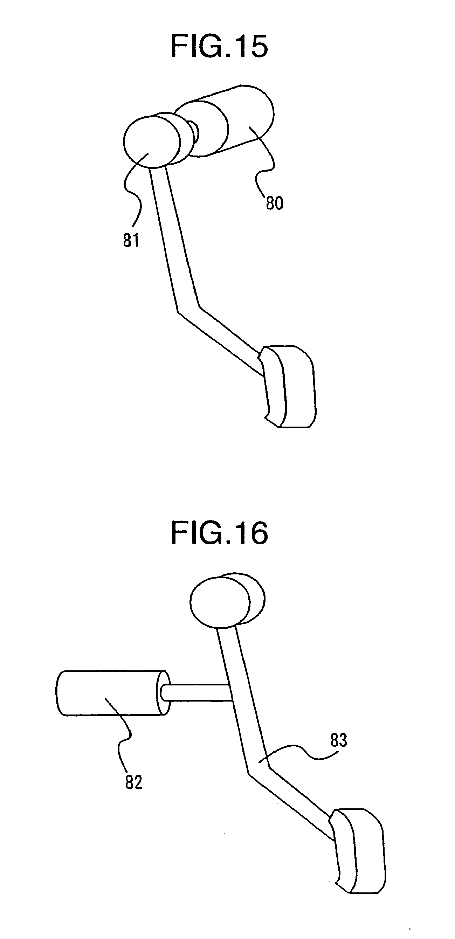

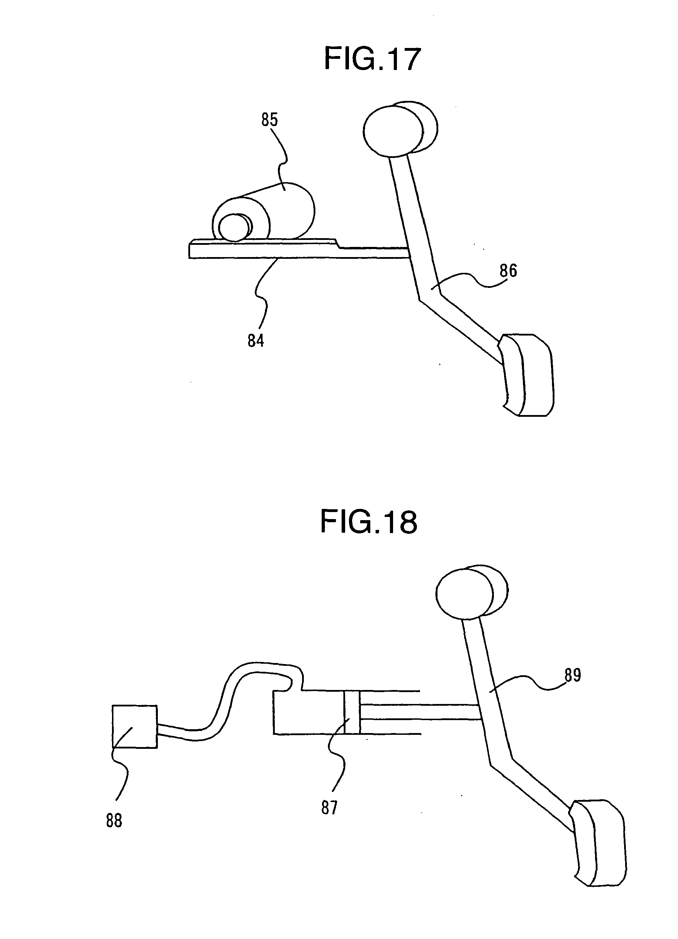

As a technique for implementing the active reaction part 3, for example, there is one in which a pedal is used as the operation input part 1, and a rotation actuator 80 is installed, as shown in Fig. 15, in a rotation axis 81 of the pedal to use, as the reaction, a rotation force generated from the rotation actuator 80. In this case, as the rotation actuator, an electric motor may be used, for example. As the active reaction part, a technique is also possible which installs a linear-motion actuator 82 in a pedal 83, as shown in Fig. 16, and thereby supplies a reaction to the pedal 83. In this case, as the linear-motion actuator, a solenoid or a linear-motion type electric motor may be used. Alternatively, as shown in Fig. 17, a configuration may be employed such that the output of a rotation actuator 85 is converted to a linear-motion direction by rotation/ linear-motion conversion means 84 to drive a pedal. As the rotation/linear-motion conversion means, a worm gear or a ball screw may be used, for example. Here, as the linear-motion actuator, for example, a technique may be employed which drives a piston 87 by use of a hydraulic pressure generated by an hydraulic pump 88 as shown in Fig. 18 and thereby supplies a reaction to a pedal 89.

In Fig. 1, the active reaction control part 5 calculates a reaction to be generated by use of information (for example, operating width, operating speed, operating acceleration or the like) obtained from the operation information detection part 6 and controls the active reaction part 3 to allow a reaction to be generated in the operation input part 1.

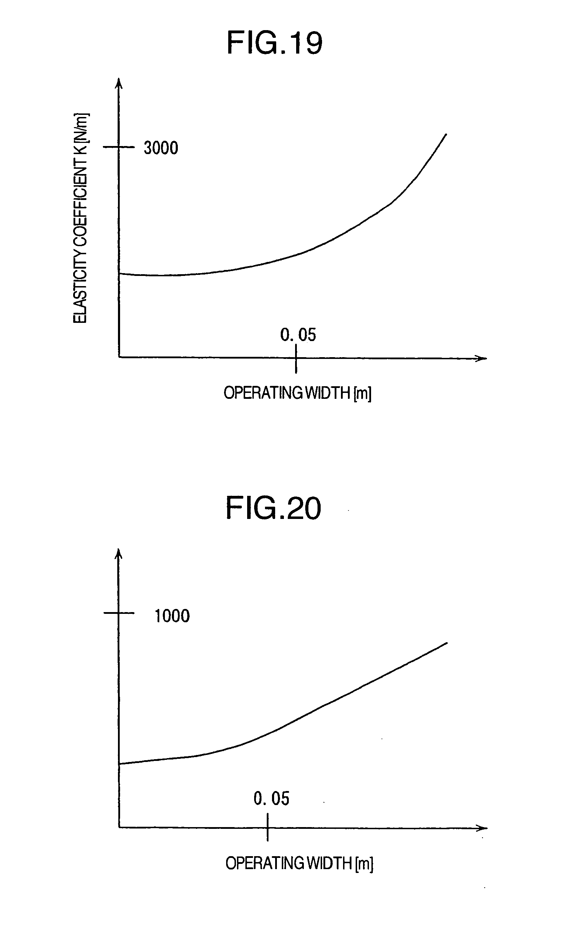

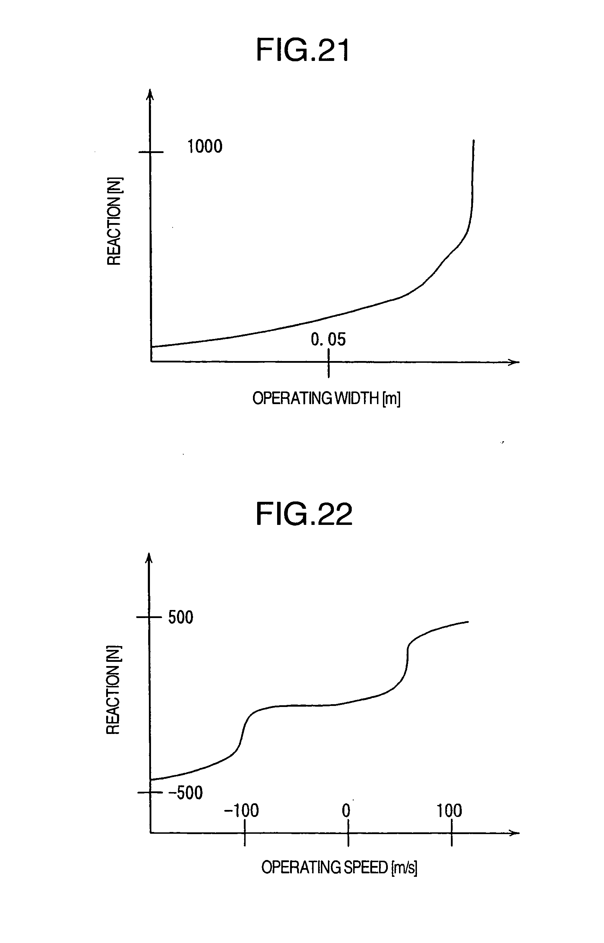

Here, methods for determining a reaction to be generated include one which determines elasticity coefficient K and damping coefficient D from Figs. 19 and 20 based on, for example, an operating width and calculates a reaction (= K x Operating Width + D x Operating Speed), and one which uses a preliminarily set mass coefficient M to calculate a reaction (= K x Operating Width + D x Operating Speed + M x Operating Acceleration) and uses the value as the reaction. Here, for example, when the operation input part 1 is an ordinary brake pedal, M has a value of about 0.2 kg. Fig. 19 is a graph of operating width versus elasticity coefficient; Fig. 20 is a graph of operating width versus damping coefficient. Also, a reaction may be determined directly from an operating width detected by use of a graph of operating width versus reaction as shown in Fig. 21, or may be determined by adding a reaction determined from a graph of Fig. 21 and a reaction determined from a graph of Fig. 22 by use of an operating speed.

Now, referring to Fig. 1, the operation information detection part 6 detects an operating force, an operating width, an operating speed or an operating acceleration applied the operation input part 1, for example. Alternatively, the part 6 detects that the operation input part 1 has been operated by a switch.

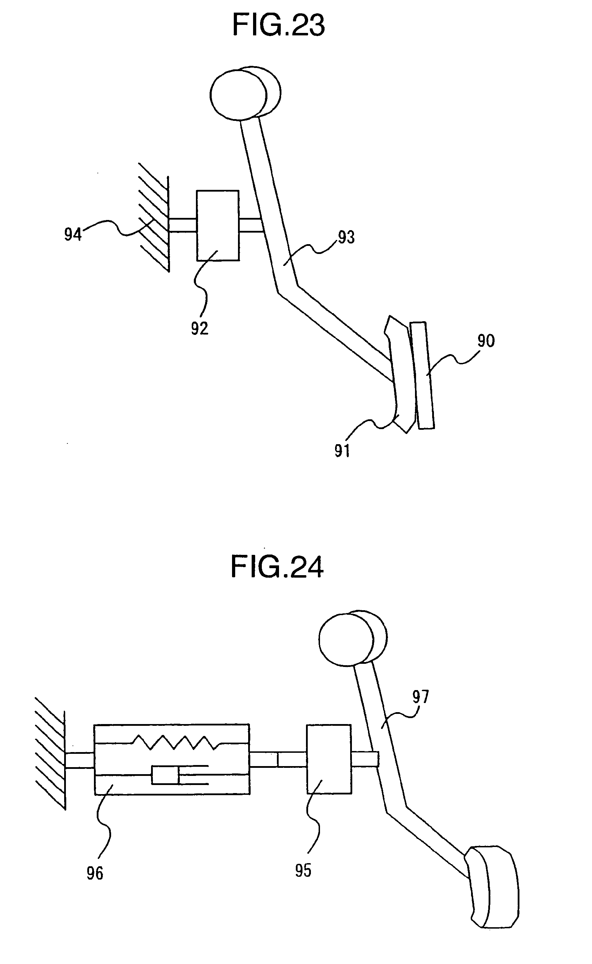

Specific installation examples of the operation information detection part are shown in Figs. 23 to 25. As the sensor detecting an operating force, a load sensor or a distortion gauge may be used. For example, as shown in Fig. 23, a load sensor 90 may be attached to a tip end 91 of a pedal, or a load sensor 92 may be installed between the pedal 93 and a reference face 94. Alternatively, for example, as shown in Fig. 24, a load sensor 95 may be installed between a passive reaction part 96 and a pedal 97. Also, by installing a distortion gauge in a pedal structure and measuring a resistance variation caused by a small displacement of the distortion gauge, an operating force may be detected. Also, an operating force may be equivalently determined by performing calculation based on a variation on speed or acceleration of the pedal.

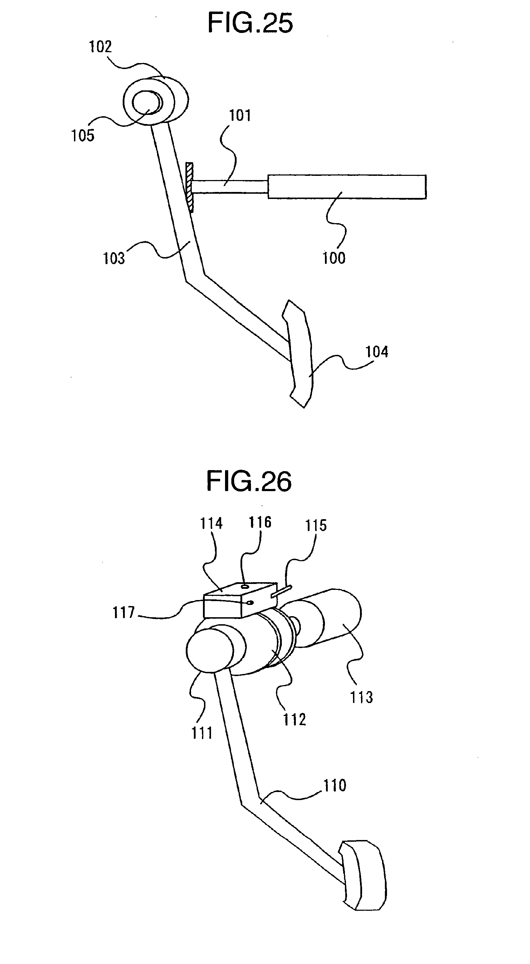

As means for detecting an operating width, for example, a stroke sensor, a potentiometer or a rotary encoder may be used. Here, a stroke sensor is installed as shown in Fig. 25, for example. In the stroke sensor 100, a rod 101 contacts a pedal 103, and when the rod 101 is pushed in or extracted, a movement of the rod 101 is detected as an operating width of the pedal 103. A technique of detecting a movement of the rod 101 may be implemented, for example, by detecting a variation on electrical resistance by use of a variable resistor. Alternatively, a technique of detecting a movement of the rod 101 as a variation on magnetic resistance by use of a magnetic circuit is also possible. Also, a technique of detecting an operating width of the pedal 103 may be implemented, for example, by installing a potentiometer 105 in a rotation axis 102 and detecting a rotation angle of the pedal 103 as a variation on electrical resistance. The potentiometer may employ a technique of detecting a rotation angle from a variation on resistance of a variable resistor, for example. Alternatively, a rotary encoder may be installed in a rotation axis 102 of the pedal 103 to detect a rotation angle of the pedal 103, for example. The rotary encoder may employ a technique of detecting a magnetic variation by use of a magnetic element, or a technique of performing detection by an optical pickup by use of a rotation slit, for example. Also, an operating width of the pedal 103 may be measured by irradiating laser light on the pedal 103 and measuring a phase of the reflected light. Alternatively, an operating width of the pedal 103 may be determined by performing a calculation of integrating an operating speed.

To detect an operating speed, a tachometer is used, for example. The tachometer may employ, for example, a technique of measuring a rotation speed by use of an electromotive force generated by a variation on magnetic flux with respect to a coil. Also, an operating speed may be determined by performing a calculation of differentiating an operating width, or determined by performing a calculation of integrating an operating acceleration. An operating acceleration may be detected by performing a measurement using an acceleration sensor, or by performing a calculation of differentiating a speed.

Until now, the operation input device provided with an active reaction part has been described. However, the active reaction part generates a reaction by use of an actuator, so when the actuator fails, the following problem arises.

In the active reaction part, there exists friction resistance of the actuator, or friction resistance in a gear mechanism, such as an amplification mechanism or a decelerating mechanism attached to the actuator, or in a force transmission mechanism. Also, when the actuator is an electrical motor, resistance caused by counterelectromotive force also exists. Therefore, when the actuator does not operate normally, the operation input part may be hard to operate. Further, depending on amplification ratio or deceleration ratio of the amplification mechanism or decelerating mechanism, even when a force is applied to the operation input part 1, the active reaction part may be inoperative, thus making it impossible to operate the operation input part 1.

Therefore, in order to make the operation input part 1 usable and make the vehicle operatable even when the active reaction part does not operate normally, the active reaction part must be separated from the operation input part by use of an active reaction releasing part.

Thus, by installing the active reaction releasing part 4 in a portion at which a reaction by the active reaction part 3 is transmitted to the operation input part 1, and cutting off the force transmission between the active reaction part 3 and the operation input part 1 by means of an electrical signal or a mechanical operation, even when the active reaction part 3 is locked or causes an operational trouble, it is possible to prevent the operation input part 1 from being affected.

Specific embodiments of the active reaction part 4 will be described with reference to Figs. 26 to 29.

First, Fig. 26 shows an embodiment which uses a pedal 110 as the operation input part 1 and arranges, as the active reaction part, an electric motor 113 capable of transmit a torque to a rotation axis. Here, between the electric motor 113 and the pedal 110, there is arranged a clutch 112 as the active reaction releasing part. This clutch 112 is constituted of two disks; when the disks are in contact with each other, the electric motor 113 and the pedal 110 are in contact with each other, whereby a rotation force by the electric motor 113 is transmitted to the pedal 110 to provide a reaction to the operation input part. Here, when a configuration is employed such that, when current flows in an opening device 114, the two disks of the clutch 112 are separated and the electric motor 113 and the pedal 110 are mechanically disconnected, then it is possible to operate the pedal 110 even when the electric motor 113 is locked or causes an operational trouble. Here, the opening device 114 may be implemented by a solenoid or an electric motor. Also, even though current does not flow in the opening device 114, a configuration may be employed such that the two disks of the clutch 112 are separated by a mechanical operation such as operating of a lever 115, pushing of a switch 116 or turning of a screw 117.

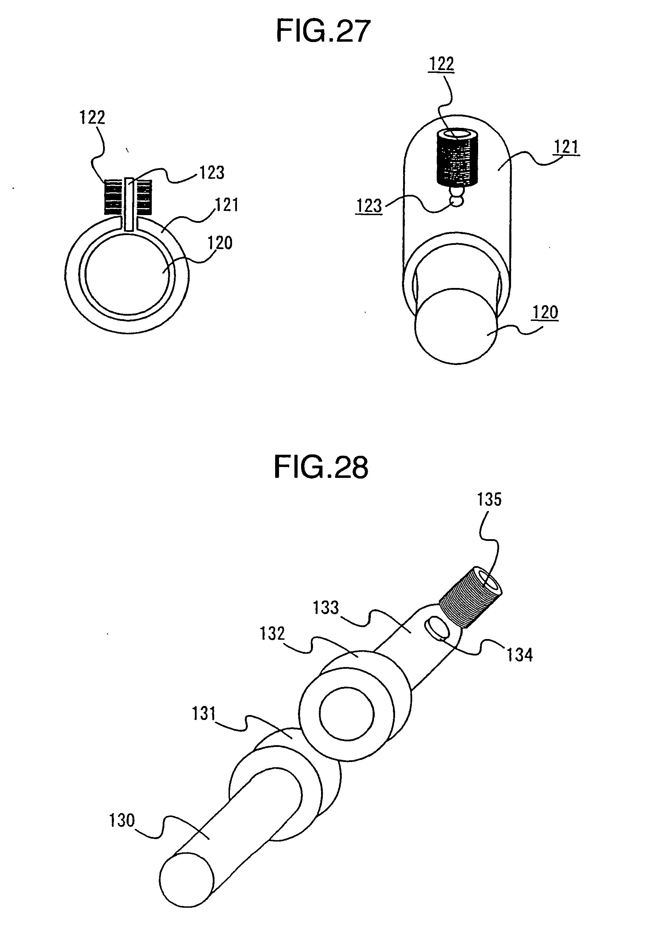

Also, as shown in Fig. 27, a configuration may be employed such that an active reaction part and an operation input part are connected via a drive axis 120 and a drive axis 121, and the drive axis 120 and drive axis 121 are fixed by a locking component 123. In this configuration, when current flows in a solenoid 122 to extract or insert the locking component 123, the drive axis 120 and drive axis 121 are connected or separated. Further, the extracting/inserting of the locking component 123 may be performed by a mechanical operation such as lever operation or screw driving, or a mechanism may be employed such that the extracting/inserting can be performed directly by the hand or a tool. By employing such configuration, even when the active reaction part is locked or causes an operational trouble, it is possible to operate the operation input part. The configuration of Fig. 27 is also applicable to a case where the operation input part has a configuration as shown in Fig. 9.

Further, a configuration may be employed such that the connection between the active reaction part and operation input part is made via a transmission mechanism as shown in Fig. 28. In the embodiment shown in Fig. 28, a drive axis 130 and a drive axis 133 are connected via a transmission part 131 and a transmission part 132; by controlling current flowing in a solenoid 135, the transmission part 131 and transmission part 132 can be joined or separated. The transmission parts 131 and 132 may transmit a torque by friction or may transmit a torque by meshing.

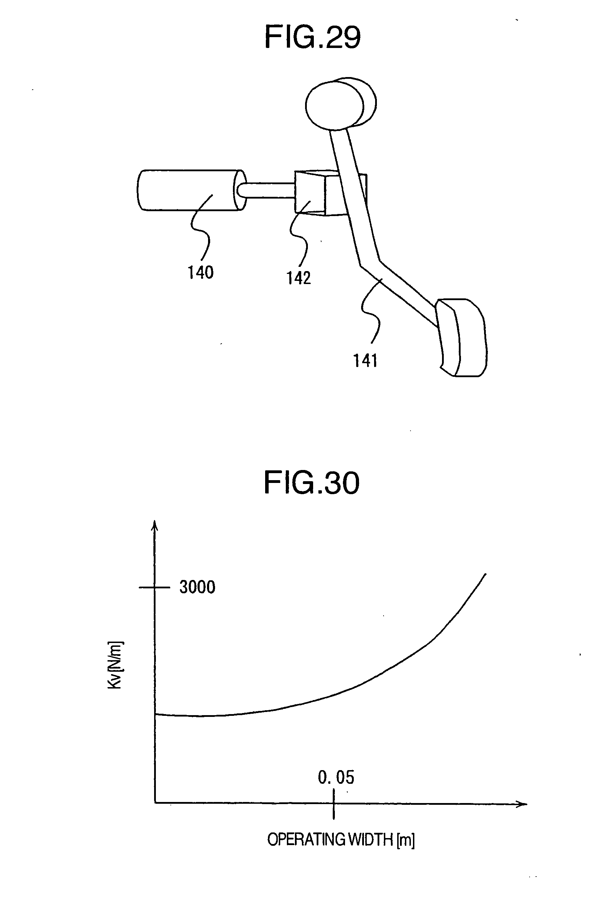

Also, for example as shown in Fig. 29, a configuration may be employed such that the connection between an actuator 140 and a pedal 141 is made via a locking component 142. When subjected to a pulling force or a compressing force having a preliminarily set magnitude, the locking component 142 is broken. When the actuator 140 operates normally, the balance between an operating force and a reaction applied to the pedal 141 is almost achieved and the locking component 142 is not broken. However, when the actuator 140 does not operate normally, a difference between an operating force and a reaction applied to the pedal 141 is exerted on the locking component 142 and thus the locking component 142 is broken. When the locking component 142 is broken, the actuator 140 and pedal 141 are separated.

When the active reaction releasing part is operated by electrical means, it is determined by the active reaction part normal determination part whether or not the active reaction part operates normally. If it is determined by the active reaction part normal determination part that the active reaction part does not operate normally, the active reaction part normal determination part performs an electrical operation for separating the active reaction part with respect to the active reaction releasing part.

Here, criteria for the active reaction part normal determination part 7 determining that the active reaction part 3 does not operate normally, will be described.

A reaction in the operation input part 1 is generated by the passive reaction part 2 or an active reaction part 3. The active reaction part 3 requires an electrical force for the driving thereof. Accordingly, when there is not enough electricity capacity left in the vehicle power supply for driving the active reaction part 3, or when electric power is not supplied to an electric system to which the active reaction part 3 belongs, a reaction cannot be generated by the active reaction part 3. Therefore, when the current or voltage of power supplied to the active reaction part 3 is interrupted, or when it is estimated from the relationship between charging and discharging of the vehicle power supply that the capacity required to drive the active reaction part 3 has not been secured, then the active reaction part normal determination part 7 determines that the active reaction part 3 does not operate normally.

Also, for example, when a trouble occurs in the actuator itself of the active reaction part 3, or when a trouble occurs in the active reaction control device 5, or when a trouble occurs in the operation information detection part 6, or when there is an error or an anomaly in the operation information obtained from the operation information detection part 6, or when a trouble occurs in a signal line or a power line between the operation information detection part 6 and the active reaction part 3, then it is determined that the active reaction part 3 cannot be normally operated. Examples of trouble determination will be shown below.

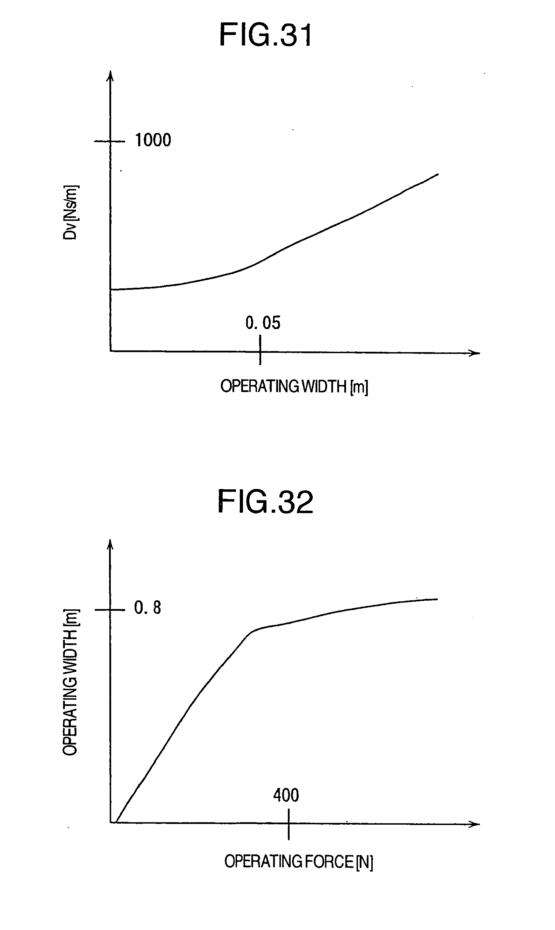

For example, when (Kv x Operating Width + Dv x Operating Speed) is calculated by use of an operating width and operating speed of the operation input part 1, and the difference between the resultant value and the operating force applied to the operation input part 1 is greater than a preliminarily set value Δv, then it can be determined that the active reaction part 3 does not operate normally. Here, Kv may be determined in a graph of Fig. 30 and Dv, in a graph of Fig. 31. Also, Δv may be set to 10 % of (Kv × Operating Width + Dv × Operating Speed). Alternatively, for example, when the absolute value of a difference between an operating force applied to the operation input part and the total value of reactions of the passive reaction part and active reaction part is greater than a preliminarily set value, it may be determined that the active reaction part does not operate normally. A reaction generated by the passive reaction part may be estimated from an operating width and operating speed of the operation input part, or may be detected by a load sensor.

When it is determined that the active reaction part 3 does not operate normally, the active reaction part normal determination part 7 drives the alarm part 12 and thereby indicates that the active reaction part does not operate normally. For example, the alarm part 12 may use auditory information such as buzzer or sound, or may use visual information such as lamp or character. Alternatively, for example, the alarm part 12 may trigger activation of the active reaction releasing part 7 by a mechanical operation to urge that the active reaction part be separated from the operation input part.

There will now be described a case where the active reaction part is separated even when the active reaction part operates normally.

The operation input part 1 is connected to the passive reaction part 2 and active reaction part 3. Thus, even when there is no reaction by the active reaction part 3, a reaction is generated in the pedal by the passive reaction part alone. Therefore, even when the active reaction part operates normally, the active reaction part 3 is separated and the passive reaction part 2 alone generates a reaction in the pedal. Thus, power consumption and actuator drive sound can be suppressed. Also, when the reaction which the pedal needs to generate is the same as a reaction generated by the passive reaction part 2, the output of the active reaction part 3 is ideally 0.

However, when the reaction of the operation input part is to be generated by the passive reaction part alone, if the active reaction part is mechanically connected to the operation input part, extra load is exerted on the operation input part by counterelectromotive force or friction resistance of the active reaction part and thus the operation input part cannot be operated or is extremely hard to operate. Accordingly, when the active reaction part is not required, the active reaction releasing part may be used to separate the active reaction part from the pedal.

More specifically, for example, when a measured value of reaction generated by the passive reaction part, or an estimate value of reaction to be generated by the passive reaction part is equal to the reaction to be implemented by the active reaction part, the active reaction part is separated. Alternatively, for example, when a setting is selected such that the active reaction part is made inoperative by a switch or a lever, the active reaction part is separated.

According to the present embodiment, when desired reaction characteristics can be implemented by the passive reaction part alone, it is possible to separate the influences of the active reaction part, such as friction resistance, thereby achieving greater ease of control and reducing power consumption.

An operation of transmitting to the vehicle system 11, operation information of the operation input part 1 detected by the operation information detection part 6 will now be considered. Based on transmitted operation information, the vehicle system 11 changes the behavior of the vehicle. In the operation information, there is contained at least one of: operating width and operating speed of the operation input part 1; and operating force applied to the operation input part 1.

Here, when a trouble occurs in the active reaction part 3 of the operation input device, the operation input part cannot be operated or is hard to operate due to resistance of the actuator and transmission mechanism included in the active reaction part 3; thus, when unusual resistance is applied to the operation input part 1, it is not possible to detect accurately an operating width or operating speed of the operation input part 1. Consequently, when the vehicle system 11 changes the behavior of the vehicle based on the operating width or operating speed of the operation input part 1, it is not possible to normally drive the vehicle and thus the vehicle may make a dangerous behavior. However, even when unusual resistance is applied to the operation input part 1, an operating force applied to the operation input part 1 can be detected. Therefore, when a trouble occurs in the active reaction part, a technique of the operation information transmission part transmitting to the vehicle system, operation information based on an operating force of the operation input part is effective.

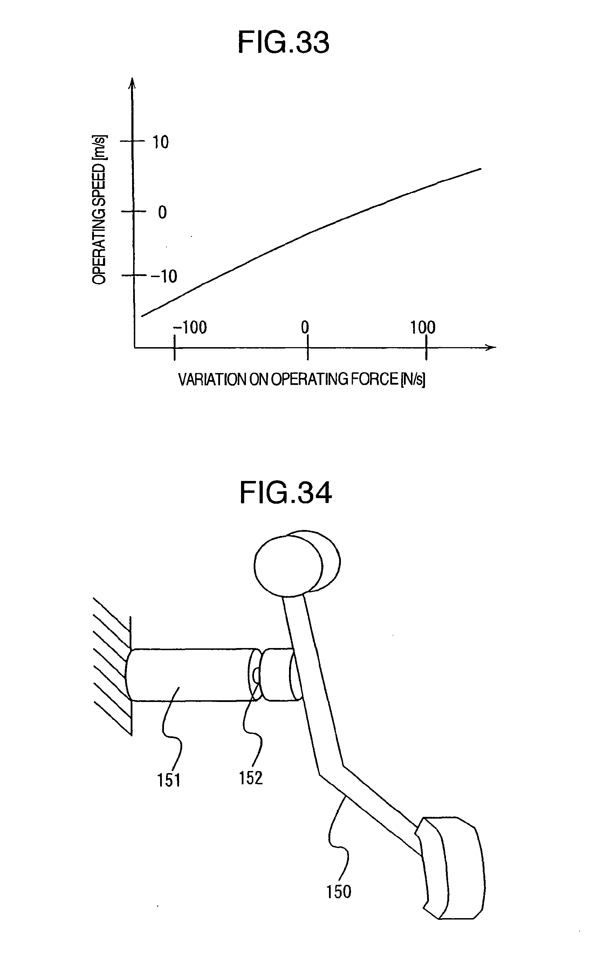

Here, for example, when a trouble occurs in the active reaction part, only the operating force may be used as the operation information to be transmitted to the vehicle system, whereby the vehicle system determines the behavior of the vehicle based on the operating force. However, when the vehicle system determines the behavior of the vehicle based on operating width or operating speed, even when a trouble occurs in the active reaction part, it is more effective to transmit an operating width or operating speed from the operation input device to the vehicle system. Thus, when a trouble occurs in the active reaction part, a technique may be employed which calculates an operating width of the operation input part 1 from an operating force applied to the operation input part 1 with reference to a graph as shown in Fig. 32. Alternatively, a technique may be employed which calculates an operating speed of the operation input device by use of a variation on operating force or a derivative value of operating force of the operation input part 1 with reference to a graph as shown in Fig. 33.

Further, there will now be considered a case where the active reaction part does not operate normally and at the same time an operating force cannot be detected. Here, as shown in Fig. 34, a switch 152 is arranged between an operation input part 150 and an active reaction part 151, whereby when a force is applied to the operation input part 150, the switch 152 is changed to a pressed state, and when a force is not applied to the operation input part 150, the switch is in a not-pressed state. Even when a trouble occurs in the active reaction part, when it is determined whether or not the switch 152 is pressed, it is possible to determine whether or not a force has been applied to the operation input part 1. Thus, when the active reaction part 151 does not operate normally and the switch 152 is pressed, preliminarily set operation information is transmitted to the vehicle system.

As described above, according to the present embodiment, even when the active reaction part cannot be separated and the operation input part is hard to operate or cannot be operated, operation information with respect to the operation input part is calculated and transmitted to an external system. Accordingly, at least, the vehicle can be prevented from making a dangerous behavior and an operation input device having higher reliability can be implemented.

As described above, when the active reaction part does not operate normally, or when the active reaction part is not required, then the active reaction part is separated and the reaction of the operation input device is secured by the passive reaction alone to allow operating of the vehicle.

Techniques of the active reaction releasing part separating the active reaction part include one in which the separation is performed by use of an electrical operation by the active reaction part normal determination part, and one in which the separation is performed by use of a mechanical operation.

Also, in order to urge a mechanical operation, the active reaction part normal determination part can also indicate, by use of audial or optical information, that the active reaction part does not operate normally. Accordingly, it is possible to notify a trouble of the active reaction part to the driver.

Also, the operation information detection part detects, as operation information, an operating force applied to the operation input device, or an operating width or operating speed of the operation input device, and transmits the detected operation information to the vehicle system, thereby allowing operating of the vehicle.

Also, when the active reaction part does not operate normally and information on operating width or operating speed of the operation input device cannot be obtained, operation information is calculated by use of operating force or switch information and transmitted to the vehicle system, whereby the vehicle can be operated.

### INDUSTRIAL APPLICABILITY

Even when the active reaction part does not operate normally, or even when the active reaction part is not required, a reaction can be generated in the operation input part, thus allowing operating of the vehicle.

## Claims

1. An operation input device for a vehicle, **characterized by** comprising:
an operation input part receiving an operating force;
an active reaction part generating, against an applied operating force, a reaction by an electrical control in the operation input part; and
an active reaction releasing part opening a force transmission route between the active reaction part and the operation input part.

2. The operation input device for a vehicle according to Claim 1, **characterized by** further comprising a passive reaction part generating, against an applied operating force, a reaction by substance properties and/or structure in the operation input part, wherein the reaction by the passive reaction part is greater than the reaction by the active reaction part.

3. The operation input device for a vehicle according to Claim 1, **characterized by** further comprising an active reaction part normal determination part, wherein when the active reaction part normal determination part detects a trouble of the active reaction part, a force transmission route between the active reaction part and the operation input part is opened by the active reaction releasing part.

4. The operation input device for a vehicle according to Claim 3, **characterized in that**, when the active reaction part normal determination part detects a trouble of the active reaction part, an alarm is generated.

5. The operation input device for a vehicle according to Claim 3, **characterized in that** a deviation of the operating force applied to the operation input part from a prescribed range determined on a basis of an operating width or an operating speed of the operation input part, is included in criteria for the active reaction part normal determination part detecting a trouble of the active reaction part.

6. The operation input device for a vehicle according to Claim 1, **characterized by** further comprising:
an operation information detection part detecting operation information of the operation input part; and
a transmission part transmitting the detected operation information to a vehicle system.

7. The operation input device for a vehicle according to Claim 6, **characterized in that** the operation information detected by the operation information detection part includes at least one of operating width, operating speed and operating force of the operation input part.

8. The operation input device for a vehicle according to Claim 6, **characterized in that**, when an operating width or an operating speed of the operation input part cannot be detected, operation information is calculated based on an operating force applied to the operation input part, and transmitted to the vehicle system.

9. The operation input device for a vehicle according to Claim 6, **characterized in that**, when a trouble of the active reaction part is detected, operation information is calculated based on an operating force applied to the operation input part, and transmitted to the vehicle system.

10. The operation input device for a vehicle according to Claim 6, **characterized in that**, when a trouble of the active reaction part is detected, an operation applied to the operation input part is detected by a switch and operation information is calculated based on the switch information detected and transmitted to the vehicle system.

11. The operation input device for a vehicle according to Claim 3, **characterized by** further comprising: a passive reaction part generating, against an applied operating force, a reaction by substance properties and/or structure in the operation input part, wherein when a reaction to be generated against the operating force applied to the operation input part can be implemented by the passive reaction part alone, a force transmission route between the active reaction part and the operation input part is opened by the active reaction releasing part.

12. An operation input device for a vehicle, **characterized by** comprising:
a brake pedal one end of which is attached rotatably around a rotation axis and which receives an operating force at another end thereof and thereby rotates;
an operation input detection part detecting an operating amount and/or an operating force applied to the brake pedal;
a passive reaction part generating, against the operating force applied to the brake pedal, a reaction by substance properties and/or structure in the brake pedal;
an active reaction part generating, against the operating force applied to the brake pedal, a reaction by an electrical control in the brake pedal; and
an active reaction releasing part opening a force transmission route between the active reaction part and the operation input part.

13. The operation input device for a vehicle according to Claim 12, **characterized by** further comprising an active reaction part normal determination part, wherein when the active reaction part normal determination part detects a trouble of the active reaction part, a force transmission route between the active reaction part and the operation input part is opened by the active reaction releasing part.

14. The operation input device for a vehicle according to Claim 12, **characterized in that** the active reaction part is an electric motor arranged in the rotation axis so as to be capable of transmitting a torque.

15. The operation input device for a vehicle according to Claim 12, **characterized in that** the passive reaction part is a spring mechanism generating a displacement according to a rotation of the brake pedal.

16. The operation input device for a vehicle according to Claim 12, **characterized in that** the active reaction releasing part is a clutch mechanism arranged between the active reaction part and the brake pedal.

17. A vehicle control apparatus controlling an operation input device for a vehicle comprising:
an operation input part receiving an operating force;
an active reaction part generating, against an applied operating force, a reaction by an electrical control in the operation input part; and
an active reaction releasing part opening a force transmission route between the active reaction part and the operation input part, wherein when a trouble of the active reaction part is detected, the active reaction releasing part is controlled to open a force transmission route between the active reaction part and the operation input part.
